# EUROPEAN PATENT SPECIFICATION

(11) **EP 2 696 264 B1**
(45) Date of publication and mention of the grant of the patent: **10.01.2018**
(21) Application number: 12180099.9
(22) Date of filing: 10.08.2012
(51) Int. Cl.: G06F 3/041, G06F 1/32

(54) **Electronic device including touch-sensitive display and method of detecting touches**
Elektronische Vorrichtung mit berührungsempfindlicher Anzeige und Verfahren zum Erkennen von Berührungen
Dispositif électronique incluant un affichage sensible au toucher et son procédé de détection des touches

(43) Date of publication of application: 12.02.2014
(73) Proprietor: BlackBerry Limited, Waterloo, ON N2K 0A7 (CA)
(72) Inventor: Singh, Amit Pal, Waterloo, ON N2L 3W8 (CA); Dolson, John Edward, Kanata, ON K2K 3K1 (CA); Parekh, Premal Vinodchandra, Waterloo, ON N2L 3W8 (CA)
(74) Representative: Fennell, Gareth Charles

(56) References cited:
- EP-A1- 2 352 073
- WO-A2-2007/146779
- US-A1- 2011 115 733

## Description

### FIELD OF TECHNOLOGY

The present disclosure relates to electronic devices including, but not limited to, portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed.

US 2011/0115733 A1 discloses a touch sensing display device that includes an in-cell touch panel, a scanning driving circuit, a data driving circuit, a signal processing circuit, and a control circuit.

EP 2352073 A1 discloses a portable electronic device comprising a display unit, a backlight, a touch panel, and a power supply, all controlled by a single controller. The touch panel is mounted over the display and is not integrated in the display. If the user does not operate the device for a set period of time, the device enters a first standby state, in which the controller suspends power to the display and the backlight.

Improvements in electronic devices with touch-sensitive displays are desirable.

### SUMMARY

The invention is defined in the accompanying independent claims.

### BRIEF DESCRIPTION OF THE DRAWINGS

FIG. 1 is a block diagram of a portable electronic device in accordance with the disclosure.
FIG. 2 is a front view of one example of an electronic device in accordance with the disclosure.
FIG. 3 is a partial cross section of one example of a touch-sensitive display in accordance with the disclosure.
FIG. 4 is a diagram illustrating a sense electrode and a drive electrode operably coupled to controllers in accordance with the disclosure.
FIG. 5 is a flowchart illustrating an example of a method of detecting touches on a touch-sensitive display in accordance with the disclosure.

### DETAILED DESCRIPTION

The following describes a method and an electronic device that includes a touch controller, sense electrodes operably coupled to the touch controller, a display controller operably coupled to the touch controller to communicate with the touch controller to detect touches, and drive electrodes operably coupled to the touch controller when the electronic device is operating in a reduced power condition and operably coupled to the display controller when the electronic device is operating in a normal power condition.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

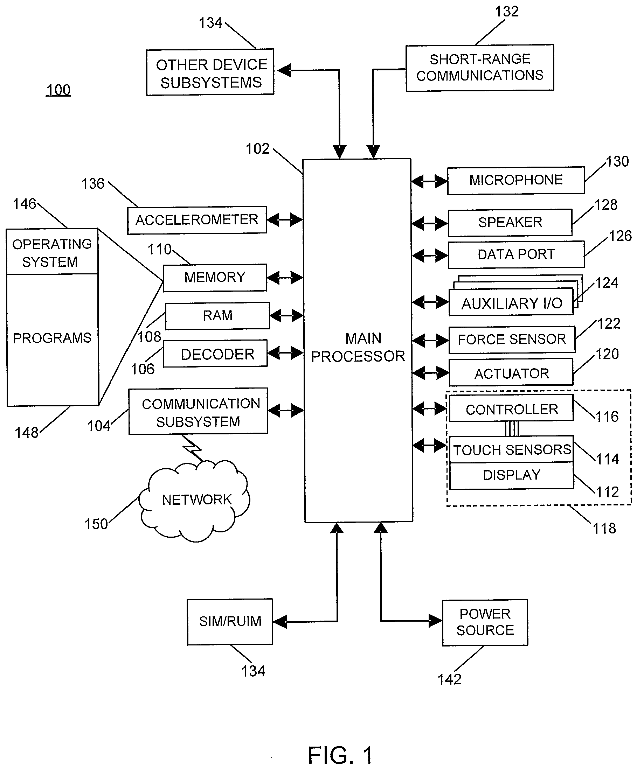

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are operably coupled to a touch controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

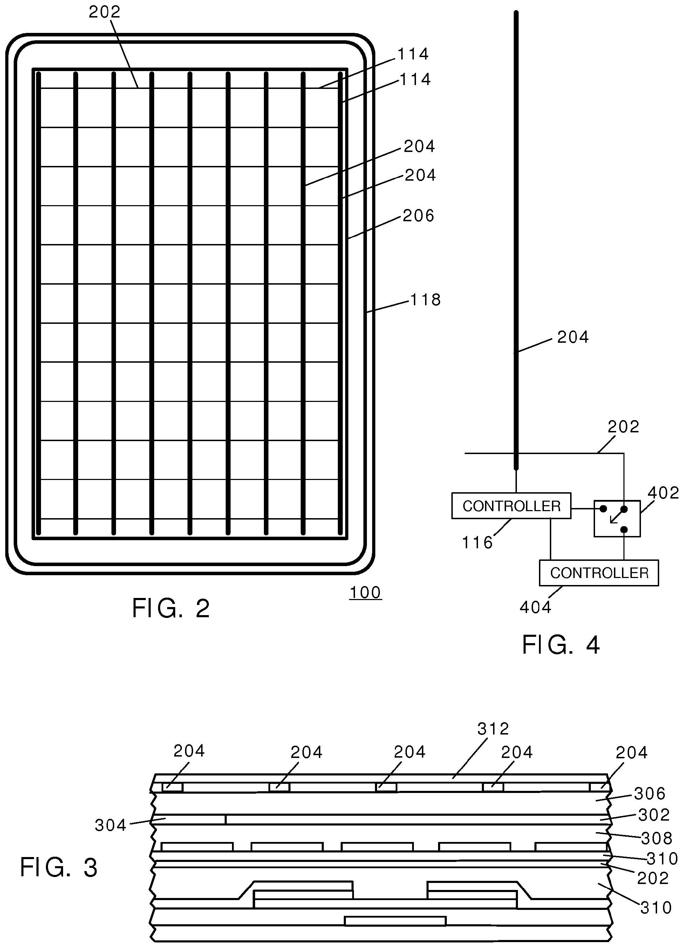

A front view of an example of the electronic device 100 is shown in FIG. 2. The electronic device 100 includes the touch-sensitive display 118. The touch-sensitive display 118 may be a capacitive touch-sensitive display that includes capacitive touch sensors that includes drive electrodes, also referred to as scanning electrodes, and sense electrodes. The display 112 includes electrodes 202 that are utilized as common electrodes. The electrodes 202 are also utilized as the drive electrodes for touch sensing. Thus, in this example, the electrodes 202 function as common electrodes and drive electrodes and are operably coupled to a display controller 404 that is part of the display 112. The sense electrodes 204 are generally illustrated as linear electrodes. Any other suitable shape may be utilized. For example, the sense electrodes 204 may be generally U-shaped. The sense electrodes are operably coupled to the touch controller 116.

The touch-sensitive display 118 includes a display area in which information may be displayed, and a non-display area extending around the periphery of the display area. The display area includes the area inside the rectangle 206 in FIG. 2. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. The electrodes 202 and the sense electrodes 204 may be disposed in the non-display area, which electrodes 202 and sense electrodes 204 may extend from the electrodes 202 and the sense electrodes 204 in the display area or may be distinct or separate from the electrodes 202 and sense electrodes 204 in the display area. A touch, including a gesture, may be associated with the display area, the non-display area, or both areas. The electrodes 202 and the sense electrodes 204 may extend across substantially the entire non-display area or may be disposed in only part of the non-display area.

The electrodes 202 and the sense electrodes 204 may comprise any suitable material, such as indium tin oxide (ITO). The electrodes 202 and the sense electrodes 204 are not visible to the naked eye when viewing the electronic device 100 in a normal operating manner, but are shown in FIG. 2 through FIG. 4 for the purpose of illustration.

A partial cross section of the touch-sensitive display 118 is shown in FIG. 3. The display 112 may include, for example, a color filter 302 and black matrix 304 disposed on a substrate 306. The display 112 may also include, for example, liquid crystal 308 disposed between pixel electrodes 310 and the color filter 302, and display elements including gate lines 312, a gate insulator 314, amorphous silicon semiconductor film 316, n-type amorphous silicon (n⁺-a-Si) film 318, source/drain electrodes 320, 322, an insulator 324, also known as an inter-layer dielectric, the common electrodes, referred to herein as electrodes 202, an upper insulator 326, all disposed on a substrate 328.

The sense electrodes 204 are disposed on the substrate 306, for example, by patterning ITO disposed on the substrate 306. Thus, the color filter 302 and black matrix 304 are disposed on one side of the substrate 306, and the sense electrodes 204 are disposed on the opposite side of the substrate 306. An outer polarizer 330 is disposed on the sense electrodes 204.
The drive electrodes 202 are operably coupled to the display controller when the electronic device 100 operates in a normal power condition. The drive electrodes 202 are operably coupled to the touch controller 116 when the electronic device 100 operates in a reduced power condition.

A diagram illustrating an electrode 202 and a sense electrode 204 is shown in FIG. 4. The sense electrode 204 is operably coupled to the touch controller 116, for example, by a flex connector. In this example, the drive electrodes 202 are operably coupled to a switch 402. The switch 402 is operably coupled to the display controller 404 and to the touch controller 116 to couple the drive electrodes 202 to the display controller 404 when the electronic device 100 is operating in a normal power condition, and to the touch controller 116 when the electronic device 100 is operating in a reduced power condition. The drive electrodes 202 may be operably coupled to the switch 402, for example, by a flex connector. The display controller 404 and the touch controller 116 are operably coupled together to communicate and coordinate driving of the drive electrodes 202 while sensing with the sense electrodes 114 when the electronic device 100 is operating in the normal operating condition. The touch controller 116 may control the display controller 404 by sending signals to the display controller 404 to control the timing of driving the drive electrodes 202 while sensing utilizing the sense electrodes 114. The switch 402 is controlled by the touch controller 116 based on commands received from the processor 102. In the above example, the switch is a discrete switch. Alternatively, the switch may be a software switch that controls which controller 116, 404 drives the electrodes 202. The electrodes 202 and controller 116, 404 outputs may be operably coupled to one or more inputs or ports that are controlled by the processor 102, touch controller 116, or other device.

The electrodes 202 and the sense electrodes 204 may be utilized to detect a touch by mutual-capacitance touch sensing. To detect a touch when the electronic device 100 is operating in a normal power condition, the switch 402 couples the electrodes 202 to the display controller 404. The electrodes 202 are driven by the display controller 404 such that pulses of signal are carried by the electrodes 202. The signal may be current or applied voltage. The sense electrodes 204 are utilized to detect changes in the signal at the nodes, which are the locations at which the sense electrodes 204 cross over the electrodes 202. To determine a touch location, a scanning operation is performed on the touch-sensitive display 118 by driving the electrodes 202 while signals from sense electrodes 204 are received by the touch controller 116. A scan of the touch-sensitive display 118 includes multiple frames. In a frame, an electrode 202 is driven utilizing multiple pulses, while receiving signals from a sense electrode 204. An electrode 202 may be driven in multiple frames of a scan while sensing utilizing the sense electrodes 204.

To operate in a reduced power condition, the display 112, including the display controller 404, may be powered down to operate in a standby mode, or at reduced power. Reduced power condition, or low power condition, which may be referred to as a "sleep" condition or state, is a condition in which no information is typically displayed on the touch-sensitive display. During reduced power condition, other processes with the electronic device 100 may be discontinued or operated at a slower speed, and one or more hardware components may be powered-down or operated at a slower speed to conserve power or provide other advantages. The electronic device 100 may enter or begin operating in reduced power condition when the processor 102 determines that no touch is detected on the touch-sensitive display 118 for a predetermined period of time, when no input is generally detected by the electronic device 100 for predetermined period of time, when the device is locked by selection of a button or receipt of a gesture on the touch-sensitive display 118, or when the device is placed in a holster or covered by a cover, to name a few examples.

To detect a touch when the display 112 is operating in a reduced power condition, and the display controller 404 is not driving the electrodes 202, the switch 402 operably couples the electrodes 202 to the touch controller 116. The electrodes 202 are driven by the touch controller 116 and the signals are received at the touch controller 116 from the sense electrodes 204.

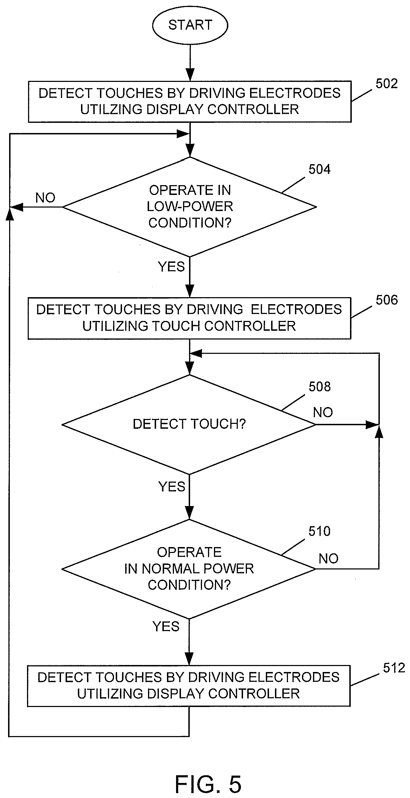

A flowchart illustrating an example of a method of detecting touches on the touch-sensitive display 118 is shown in FIG. 5. The method may be carried out by software executed, for example, by the processor 102 and/or the touch controller 116. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, device, or apparatus, which may be a non-transitory or tangible storage medium.

While the portable electronic device 100 operates in a normal power condition, the electrodes 202 are operably coupled to the display controller 404. In normal power condition, the display displays information. The electrodes 202 are driven by the display controller 404 while signals from the sense electrodes 204 are received by the touch controller 116. The touch controller 116 is operably coupled to the display controller 404 to control the timing of driving and sensing during touch detection when operating in normal power condition.

When the device 100 enters a reduced power condition 504, the process continues at 506, and the electrodes 202 are driven by the touch controller 116. Thus, in response to detecting entry into reduced power condition, the electrodes 202 are operably coupled or switched to being driven by the touch controller 116. An indication or command to operate in reduced power condition may be sent from the processor 102 to the touch controller 116 and the display controller 404. During operation of the portable electronic device 100 in a reduced power condition, the switch 402 couples the electrodes 202 to the touch controller 116. The electrodes 202 are driven by the touch controller 116 while signals from the sense electrodes 204 are received at the touch controller 116. In reduced power condition, the display 112, including the display controller 404 is powered down by reducing power to the display or by the display going to "sleep" and the display controller 404 is not utilized to drive the electrodes 202.

When a touch is detected 508, the touch data is compared to stored touch data to determine 510 when the touch is an input to trigger or initiate operation in normal power condition by "waking up" or powering up the display 112 and the display controller 404. The touch may be a gesture to return to normal power condition, for example, to unlock the electronic device 100, to engage full operation of the electronic device 100, or to wake up the electronic device 100. In response to detecting entry into normal power condition, the electrodes 202 are operably coupled to the display controller 404.

To return to normal power condition, the touch controller 116 sends an indication or a command to the display controller 404 to power up the display 112, including the display controller 404. The touch controller 116 switches 512 the switch 402 to couple the electrodes 202 to the display controller 404 again. The touch controller 116 may also send a signal to the processor 102 to "wake up" or power up the processor 102.

Changing or switching between the display controller and the touch controller as the driver for the electrodes, touch detection is facilitated in both normal power condition and reduced/low power condition. Thus, touches, including gestures, may be detected by driving the electrodes utilizing the touch controller 116. In an electronic device 100 that includes touch sensors integrated or formed in the display, such as an in-cell touch-sensitive display 118, touches may be detected, and gestures, as well as gesture direction, may be determined without need to utilize the display controller to drive the electrodes 202. Thus, touches, including gestures, that wake up or power up the electronic device 100 may be detected when the electronic device 100 is in a low power or reduced power condition, and the display, including the display controller, need not be utilized. Power utilized by the display controller, also referred to as the display driver, may be very high compared to the touch controller. Thus, turning off the display controller reduces power consumption.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. An electronic device (100) comprising:
a touch controller (116);
sense electrodes (204) operably coupled to the touch controller;
a display controller (404) operably coupled to the touch controller, and configured to communicate with the touch controller to detect at least one touch when the electronic device is operating in a normal power condition;
drive electrodes (202) that:
when the electronic device is operating in a reduced power condition, are operably coupled to and driven by the touch controller, and configured to detect at least one touch and,
when the electronic device is operating in a normal power condition, are operably coupled to and driven by the display controller, and configured to detect at least one touch;
wherein the display controller is powered down when the electronic device is operating in the reduced power condition.

2. The electronic device according to claim 1, comprising a switch (402) operably coupled to the drive electrodes, the display controller, and the touch controller and configured to operably couple the drive electrodes to the touch controller when the electronic device is operating in the reduced power condition and couple the drive electrodes to the display controller when the electronic device is operating in the normal power condition.

3. The electronic device according to claim 1, wherein the drive electrodes comprise common electrodes utilized to display information on the electronic device.

4. The electronic device according to claim 1, wherein the touch controller controls the display controller to detect at least one touch on the electronic device when the electronic device is operating in the normal power condition.

5. The electronic device according to claim 1, wherein the touch controller sends a signal to the display controller to power up the display controller to change from operating the electronic device in the reduced power condition to operating the electronic device in the normal power condition.

6. The electronic device according to claim 1, comprising a processor operably coupled to the touch controller and to the display controller to control entry of the electronic device into the reduced power condition.

7. A method for detecting a touch comprising:
detecting at least one touch on a touch-sensitive display (118) by utilizing first electrodes (204) operably coupled to a touch controller (116) while a display controller (404) drives second electrodes (202);
while in a reduced power condition, detecting at least one touch on the touch-sensitive display by utilizing the first electrodes operably coupled to the touch controller while the touch controller drives the second electrodes;
wherein the display controller (404) is powered down when the electronic device is operating in the reduced power condition.

8. The method according to claim 7, comprising coupling the second electrodes to the display controller (404) in response to detecting entry into a normal power condition.

9. The method according to claim 7, comprising switching from coupling the second electrodes to the display controller (404) to coupling the second electrodes to the touch controller when entering the reduced power condition.

10. The method according to claim 7, comprising switching from coupling the second electrodes to the touch controller to coupling the second electrodes to the display controller (404) when entering a normal power condition from the reduced power condition.

11. The method according to claim 7, comprising utilizing the second electrodes (202) as common electrodes to display information on an electronic device (100).

12. The method according to claim 7, wherein entry into the reduced power condition is controlled by a processor operably coupled to the touch controller and to the display controller (404).

13. A computer-readable storage medium having computer-readable code stored thereon, the computer-readable code executable by at least one processor of a portable electronic device (100) to perform the method of any of claims 7 to 12.

## Patentansprüche

1. Elektronische Vorrichtung (100), umfassend:
einen Touch Controller (116);
Sensorelektroden (204), die funktionsmäßig mit dem Touch Controller verbunden sind;
einen Anzeigecontroller (404), der funktionsmäßig mit dem Touch Controller verbunden ist und ausgelegt ist, um mit dem Touch Controller zu kommunizieren, um mindestens eine Berührung zu erkennen, wenn die elektronische Vorrichtung in einem normalen Leistungszustand betrieben wird;
Ansteuerungselektroden (202), die:
wenn die elektronische Vorrichtung in einem reduzierten Leistungszustand betrieben wird, funktionsmäßig mit dem Touch Controller verbunden sind und von ihm angesteuert werden und ausgelegt sind, um mindestens eine Berührung zu erkennen und
wenn die elektronische Vorrichtung in einem normalen Leistungszustand betrieben wird, funktionsmäßig mit dem Anzeigecontroller verbunden sind und von ihm angesteuert werden und ausgelegt sind, um mindestens eine Berührung zu erkennen;
wobei der Anzeigecontroller ausgeschaltet wird, wenn die elektronische Vorrichtung in dem reduzierten Leistungszustand betrieben wird.

2. Elektronische Vorrichtung nach Anspruch 1, umfassend einen Schalter (402), der funktionsmäßig mit den Ansteuerungselektroden, dem Anzeigecontroller und dem Touch Controller verbunden ist und ausgelegt ist, um die Ansteuerungselektroden mit dem Touch Controller funktionsmäßig zu verbinden, wenn die elektronische Vorrichtung in dem reduzierten Leistungszustand betrieben wird, und um die Ansteuerungselektroden mit dem Anzeigecontroller zu verbinden, wenn die elektronische Vorrichtung in dem normalen Leistungszustand betrieben wird.

3. Elektronische Vorrichtung nach Anspruch 1, wobei die Ansteuerungselektroden gemeinsame Elektroden umfassen, die zur Anzeige von Information auf der elektronischen Vorrichtung verwendet werden.

4. Elektronische Vorrichtung nach Anspruch 1, wobei der Touch Controller den Anzeigecontroller steuert, um mindestens eine Berührung auf der elektronischen Vorrichtung zu erkennen, wenn die elektronische Vorrichtung in dem normalen Leistungszustand betrieben wird.

5. Elektronische Vorrichtung nach Anspruch 1, wobei der Touch Controller ein Signal an den Anzeigecontroller sendet, um den Anzeigecontroller einzuschalten, um vom Betrieb der elektronischen Vorrichtung im reduzierten Leistungszustand in den Betrieb der elektronischen Vorrichtung im normalen Leistungszustand zu schalten.

6. Elektronische Vorrichtung nach Anspruch 1, Umfassend einen Prozessor, der funktionsmäßig mit dem Touch Controller und dem Anzeigecontroller verbunden ist, um einen Eintritt der elektronischen Vorrichtung in den reduzierten Leistungszustand zu steuern.

7. Verfahren zum Erkennen einer Berührung, umfassend:
Erkennen von mindestens einer Berührung auf einer berührungsempfindlichen Anzeige (118) durch Verwenden erster Elektroden (204), die funktionsmäßig mit einem Touch Controller (116) verbunden sind, während ein Anzeigecontroller (404) zweite Elektroden (202) ansteuert;
in einem reduzierten Leistungszustand Erkennen von mindestens einer Berührung auf der berührungsempfindlichen Anzeige durch Verwenden der ersten Elektroden, die funktionsmäßig mit dem Touch Controller verbunden sind, während der Touch Controller die zweiten Elektroden ansteuert;
wobei der Anzeigecontroller (404) ausgeschaltet wird, wenn die elektronische Vorrichtung in dem reduzierten Leistungszustand betrieben wird.

8. Verfahren nach Anspruch 7, umfassend das Verbinden der zweiten Elektroden mit dem Anzeigecontroller (404) in Reaktion auf das Erkennen eines Eintritts in einen normalen Leistungszustand.

9. Verfahren nach Anspruch 7, umfassend das Schalten vom Verbinden der zweiten Elektroden mit dem Anzeigecontroller (404) zum Verbinden der zweiten Elektroden mit dem Touch Controller beim Eintritt in den reduzierten Leistungszustand.

10. Verfahren nach Anspruch 7, umfassend das Schalten vom Verbinden der zweiten Elektroden mit dem Touch Controller zum Verbinden der zweiten Elektroden mit dem Anzeigecontroller (404) beim Eintritt aus dem reduzierten Leistungszustand in einen normalen Leistungszustand.

11. Verfahren nach Anspruch 7, umfassend das Verwenden der zweiten Elektroden (202) als gemeinsame Elektroden zur Anzeige von Information auf einer elektronischen Vorrichtung (100) .

12. Verfahren nach Anspruch 7, wobei ein Eintritt in den reduzierten Leistungszustand von einem Prozessor gesteuert wird, der funktionsmäßig mit dem Touch Controller und dem Anzeigecontroller (404) verbunden ist.

13. Computerlesbares Speichermedium, das einen darin gespeicherten computerlesbaren Code aufweist, wobei der computerlesbare Code von mindestens einem Prozessor einer tragbaren elektronischen Vorrichtung (100) ausführbar ist, um das Verfahren nach einem der Ansprüche 7 bis 12 auszuführen.

## Revendications

1. Dispositif électronique (100) comprenant :
une unité de commande tactile (116) ;
des électrodes de détection (204) couplées de manière fonctionnelle à l'unité de commande tactile ;
une unité de commande d'affichage (404) couplée de manière fonctionnelle à l'unité de commande tactile, et configurée pour communiquer avec l'unité de commande tactile pour détecter au moins un toucher lorsque le dispositif électronique fonctionne dans un état de puissance normale ;
des électrodes d'excitation (202) qui :
lorsque le dispositif électronique fonctionne dans un état de puissance réduite, sont couplées de manière fonctionnelle à l'unité de commande tactile et excitées par celle-ci, et configurées pour détecter au moins un toucher et,
lorsque le dispositif électronique fonctionne dans un état de puissance normale, sont couplées de manière fonctionnelle à l'unité de commande d'affichage et excitées par celle-ci, et configurées pour détecter au moins un toucher ;
dans lequel l'unité de commande d'affichage est mise hors tension lorsque le dispositif électronique fonctionne dans l'état de puissance réduite.

2. Dispositif électronique selon la revendication 1, comprenant un commutateur (402) couplé de manière fonctionnelle aux électrodes d'excitation, à l'unité de commande d'affichage et à l'unité de commande tactile et configuré pour coupler de manière fonctionnelle les électrodes d'excitation à l'unité de commande tactile lorsque le dispositif électronique fonctionne dans l'état de puissance réduite et pour coupler les électrodes d'excitation à l'unité de commande d'affichage lorsque le dispositif électronique fonctionne dans l'état de puissance normale.

3. Dispositif électronique selon la revendication 1, dans lequel les électrodes d'excitation comprennent des électrodes de référence utilisées pour afficher des informations sur le dispositif électronique.

4. Dispositif électronique selon la revendication 1, dans lequel l'unité de commande tactile commande l'unité de commande d'affichage pour détecter au moins un toucher sur le dispositif électronique lorsque le dispositif électronique fonctionne dans l'état de puissance normale.

5. Dispositif électronique selon la revendication 1, dans lequel l'unité de commande tactile envoie un signal à l'unité de commande d'affichage pour mettre sous tension l'unité de commande d'affichage afin de passer du fonctionnement du dispositif électronique dans l'état de puissance réduite au fonctionnement du dispositif électronique dans l'état de puissance normale.

6. Dispositif électronique selon la revendication 1, comprenant un processeur couplé de manière fonctionnelle à l'unité de commande tactile et à l'unité de commande d'affichage pour commander l'entrée du dispositif électronique dans l'état de puissance réduite.

7. Procédé de détection d'un toucher comprenant le fait :
de détecter au moins un toucher sur un écran tactile (118) en utilisant des premières électrodes (204) couplées de manière fonctionnelle à une unité de commande tactile (116) tandis qu'une unité de commande d'affichage (404) excite des deuxièmes électrodes (202) ;
de détecter, dans un état de puissance réduite, au moins un toucher sur l'écran tactile en utilisant les premières électrodes couplées de manière fonctionnelle à l'unité de commande tactile tandis que l'unité de commande tactile excite les deuxièmes électrodes ;
dans lequel l'unité de commande d'affichage (404) est mise hors tension lorsque le dispositif électronique fonctionne dans l'état de puissance réduite.

8. Procédé selon la revendication 7, comprenant le couplage des deuxièmes électrodes à l'unité de commande d'affichage (404) en réponse à la détection de l'entrée dans un état de puissance normale.

9. Procédé selon la revendication 7, comprenant la commutation du couplage des deuxièmes électrodes à l'unité de commande d'affichage (404) pour coupler les deuxièmes électrodes à l'unité de commande tactile lors de l'entrée dans l'état de puissance réduite.

10. Procédé selon la revendication 7, comprenant la commutation du couplage des deuxièmes électrodes à l'unité de commande tactile pour coupler les deuxièmes électrodes à l'unité de commande d'affichage (404) lors de l'entrée dans un état de puissance normale après l'état de puissance réduite.

11. Procédé selon la revendication 7, comprenant l'utilisation des deuxièmes électrodes (202) comme électrodes de référence pour afficher des informations sur un dispositif électronique (100).

12. Procédé selon la revendication 7, dans lequel l'entrée dans l'état de puissance réduite est commandée par un processeur couplé de manière fonctionnelle à l'unité de commande tactile et à l'unité de commande d'affichage (404) .

13. Support de stockage lisible par ordinateur ayant un code lisible par ordinateur stocké sur celui-ci, le code lisible par ordinateur pouvant être exécuté par au moins un processeur d'un dispositif électronique portable (100) pour exécuter le procédé de l'une des revendications 7 à 12.
